# FASCICULE DE BREVET EUROPEEN

(11) **EP 4 299 372 B1**
(45) Date de publication et mention de la délivrance du brevet: **12.03.2025**
(21) Numéro de dépôt: 23181962.4
(22) Date de dépôt: 28.06.2023
(51) Int. Cl.: B60N 2/70, B60N 2/90, B60N 2/02

(54) **ELÉMENT DE SIÈGE ET SIÈGE DE VÉHICULE AUTOMOBILE**
SITZELEMENT UND KRAFTFAHRZEUGSITZ
SEAT ELEMENT AND MOTOR VEHICLE SEAT

(30) Priorité: 30.06.2022 FR 2206656
(43) Date de publication de la demande: 03.01.2024
(73) Titulaire: FAURECIA Sièges d'Automobile, 92000 Nanterre (FR)
(72) Inventeur: SOLTNER, Stéphane, 70240 Mailleroncourt Charette (FR); PLANSON, Jérôme, 91670 Angerville (FR); ELLER, Benjamin, 75020 Paris (FR)
(74) Mandataire: Plasseraud IP

(56) Documents cités:
- DE-T5- 112013 001 427
- FR-A1- 3 105 120

## Description

### Domaine technique de l'invention

La présente invention est relative à un élément de siège intégrant un dispositif vibrant à un siège notamment de d'un véhicule automobile.

### Etat de la technique antérieure

Dans le domaine automobile, en particulier, il est connu d'intégrer dans un siège de véhicule, un dispositif vibrant (également appelé « vibreur » ou « *exciter* », par anglicisme). Un tel dispositif vibrant peut notamment être mis en œuvre pour alerter l'occupant du siège de véhicule d'un danger. Un tel siège est donc plus particulièrement destiné au conducteur du véhicule automobile.

Un tel dispositif vibrant peut notamment être disposé dans le dossier d'un siège de véhicule.

Une difficulté propre à l'intégration d'un tel dispositif vibrant dans un dossier de siège de véhicule automobile est de concilier le confort de l'occupant et la perception par l'occupant de l'alerte quand le dispositif vibrant est mis en œuvre.

Ainsi, fixer un tel dispositif vibrant sur l'armature du dossier de siège tend à provoquer des vibrations de cette armature, par réaction à la mise en œuvre du dispositif vibrant. Le confort de l'occupant du siège est alors trop détérioré pour que cette solution puisse être retenue en pratique.

Le document FR 3 105 120 A1 montre par exemple un élément de siège avec une plaque de support ayant au moins un trou et au moins un dispositif vibrant agencé au moins en partie dans le trou, le dispositif vibrant comportant au moins un élément vibrant mobile selon une direction perpendiculaire à la plaque de support.

Il demeure donc un besoin pour un dossier de siège de véhicule automobile intégrant un dispositif vibrant, et ne présentant pas au moins certains des inconvénients susmentionnés.

### Présentation de l'invention

Un premier but de l'invention est de remédier à cet inconvénient.

Un deuxième but de l'invention est de découpler la fréquence de vibration du dispositif vibrant de la fréquence naturel de vibration de la plaque de support.

Un troisième but de l'invention est de diminuer la transmission des vibrations des dispositifs vibrants vers le dossier de siège afin que la sensation de vibration soit localisée.

### Résumé de l'invention

L'invention concerne un élément de siège comportant une plaque de support ayant au moins un trou et au moins un dispositif vibrant agencé au moins en partie dans le trou, le dispositif vibrant comportant au moins un élément vibrant mobile selon une direction perpendiculaire à la plaque de support. La plaque de support comporte une partie de support et au moins une partie de blocage conformée pour bloquer la transmission des vibrations du au moins un dispositif vibrant, ladite partie de blocage entoure au moins une partie d'un bord du trou de la plaque de support, ladite partie de blocage comportant une quantité de matière inférieure par unité de surface à la partie de support de manière à diminuer la raideur de la plaque.

Avantageusement, les vibrations du châssis du dispositif vibrant ayant une fréquence dans la plage de fréquence du dispositif vibrant sont moins transmises à la partie de support et sont donc moins transmises au dossier ou à l'assise du siège. Avantageusement, la fonction de transfert entre la résonnance du dispositif vibrant et l'accélération de la plaque de support est diminuée.

Avantageusement, dans un élément de siège selon l'invention les vibrations sont nettement plus localisées. La sensation pour l'occupant du siège est considérablement améliorée.

Les caractéristiques exposées dans les paragraphes suivants peuvent, optionnellement, être mises en œuvre. Elles peuvent être mises en œuvre indépendamment les unes des autres ou en combinaison les unes avec les autres : La partie de blocage comporte au moins une lumière traversante.

La au moins une lumière traversante est une découpe en forme de bande sensiblement rectiligne.

La découpe en forme de bande présente une largeur comprise entre 5 millimètres et 10 millimètres.

La partie de blocage comporte plusieurs découpes en forme de bande parallèlement les unes aux autres.

La plaque de support comprend une portion de plaque située entre deux découpes en forme de bande ayant une largeur comprise entre 5 millimètres et 10 millimètres, lesdites deux découpes en forme de bande étant adjacentes.

La au moins une lumière traversante est une découpe en forme de section circulaire. La section circulaire d'une découpe présente une largeur comprise entre 2, 5 millimètres et 5 millimètres.

La partie de blocage comporte plusieurs découpes en forme de section circulaire, lesdites découpes en forme de section circulaire étant concentriques.

Au moins deux découpes en forme de section circulaire possèdent un même rayon de courbure.

Au moins deux découpes en forme de section circulaire possèdent des rayons de courbure différents.

Une portion de plaque de support située entre deux découpes en forme de section circulaire présente une largeur est comprise entre 2, 5 millimètres et 5 millimètres, lesdites deux découpes en forme de section circulaire étant adjacentes.

La partie de blocage de la plaque de support comporte une épaisseur médiane inférieure à une épaisseur médiane de la partie de support de la plaque de support. L'épaisseur de la partie de blocage est comprise entre 30 % et 60 % de l'épaisseur de la partie de support, et de préférence, l'épaisseur de la partie de blocage est sensiblement égale à 45% de l'épaisseur de la partie de support.

La plaque de support est réalisée dans une matière plastique, en particulier dans un matériau polymère parmi de l'acrylonitrile butadiène styrène, un mélange de polycarbonate et d'acrylonitrile butadiène styrène, du polycaprolactame et du polypropylène isotactique, du polyamide,du polycaprolactame et du polypropylène isotactique.

L'invention concerne également un siège de véhicule comportant un élément de siège conformé selon les caractéristiques mentionnées ci-dessous.

### Brève description des figures

[Fig. 1] est une vue schématique de côté d'un exemple de siège de véhicule ;
[Fig. 2] est une vue schématique et en perspective d'une partie d'une plaque de support selon un premier mode de réalisation de l'invention, la plaque de support étant destinée à être fixée à une armature de dossier telle qu'illustrée sur la figure 1,
[Fig. 3] est une vue agrandie d'une partie de la plaque de support illustrée sur la figure 2,
[Fig. 4] est une vue schématique de face d'une partie de blocage d'une plaque de support selon un deuxième mode de réalisation de l'invention,
[Fig. 5] est une section schématique d'une plaque de support selon un troisième mode de réalisation de l'invention, le plan de section est illustré sur la figure 6,
[Fig. 6] est une vue schématique de face d'une plaque de support selon le quatrième mode de réalisation de l'invention,
[Fig. 7] est une vue schématique de face d'une plaque de support d'un module de nez d'assise selon un mode de réalisation de l'invention,
[Fig. 8] est une vue schématique de face d'une plaque de support d'un module de nez d'assise selon un autre mode de réalisation de l'invention.

### Description détaillée de l'invention

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un siège de véhicule dans sa position normale d'utilisation.

En particulier, la direction longitudinale X s'entend de la direction longitudinale du siège. La direction longitudinale du siège est considérée être la même que la direction longitudinale du véhicule automobile dans lequel le siège est monté. Cette direction longitudinale X correspond à la direction normale d'avancement du véhicule. La direction longitudinale X est horizontale. La direction transversale Y du siège correspond ainsi à la direction transversale ou latérale du véhicule automobile. Cette direction transversale correspond à une direction perpendiculaire à la direction normale d'avancement du véhicule. La direction transversale Y est horizontale. Enfin, la direction verticale Z est une direction verticale du siège, perpendiculaire aux directions longitudinale et transversale.

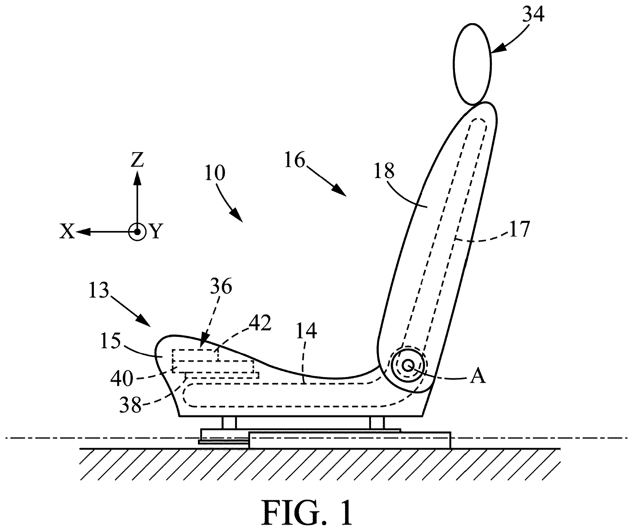

En référence à la figure 1, un siège 10 de véhicule automobile comporte une assise 13, avec une armature d'assise 14 et une garniture d'assise 15, sur laquelle un dossier 16, avec une armature dossier 17 et une garniture de dossier 18, est monté. L'armature de dossier 17 est ici pivotante autour d'un axe A transversal, par rapport à l'armature d'assise 14. L'armature de dossier comprend essentiellement deux montants verticaux solidaires d'une traverse basse et d'une traverse haute. L'armature de dossier 17 a ainsi une forme de cadre et délimite un espace creux en son centre.

Selon l'exemple illustré, le siège 10 peut également comprendre un appui-tête 34.

Dans le mode de réalisation illustré sur la figure 1, le siège 10 et notamment la garniture d'assise 15, comprend un module de nez d'assise 36 monté mobile par rapport à l'armature d'assise 14. Ici, le module de nez d'assise 36 est monté mobile en translation selon la direction longitudinale X du siège de véhicule 10, par rapport à l'armature d'assise 14. Le module de nez d'assise 36 peut être déplaçable manuellement par rapport à l'armature d'assise 14. Alternativement, un actionneur est prévu pour déplacer le module de nez d'assise 36 par rapport à l'armature d'assise 14. Le mouvement du module de nez d'assise 36 peut par exemple être guidé par deux rails 38 fixés à l'armature d'assise 14.

En particulier, le module de nez d'assise 36 comprend un châssis 40, mobile par rapport à l'armature d'assise 14. Le châssis 40 est par exemple formé par une première plaque, sensiblement plane. Le châssis 40 est par exemple monté libre en translation par rapport à l'armature d'assise 14 selon la direction longitudinale X du siège 10. Par exemple, le châssis 40, notamment la plaque dont le châssis 40 est ici formée, forme ou est solidaire de reliefs complémentaires des rails 38, permettant le guidage de la plaque mobile en translation selon la direction longitudinale X du siège 10. Le châssis 40 est par exemple réalisé en métal ou en plastique.

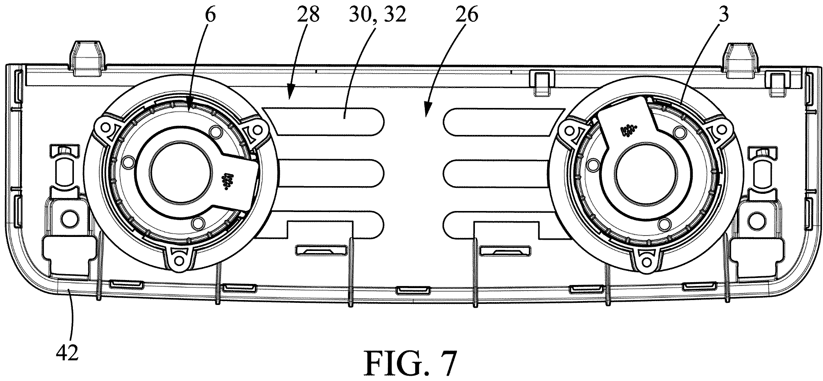

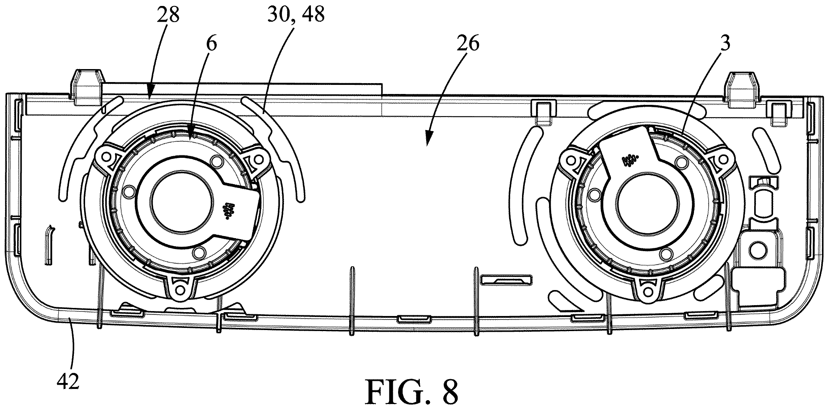

Sur le châssis 40 est ici fixée une plaque de support 42 généralement appelée plaque de garniture (de l'anglais « *trim plate* ») du module de nez d'assise 36. La plaque de support 42 est par exemple vissée, rivetée ou emboîtée élastiquement (« clipsée ») sur le châssis 40. La plaque de support 42 comporte deux trous 3 représentés sur les figures 7 et 8.

Les trous sont destinés à être réceptionnés des dispositifs vibrants 6, comme explicité ultérieurement.

Dans la présente divulgation, l'assise 13, le dossier 16 et le module de nez d'assise 36 sont définis comme étant des éléments de siège.

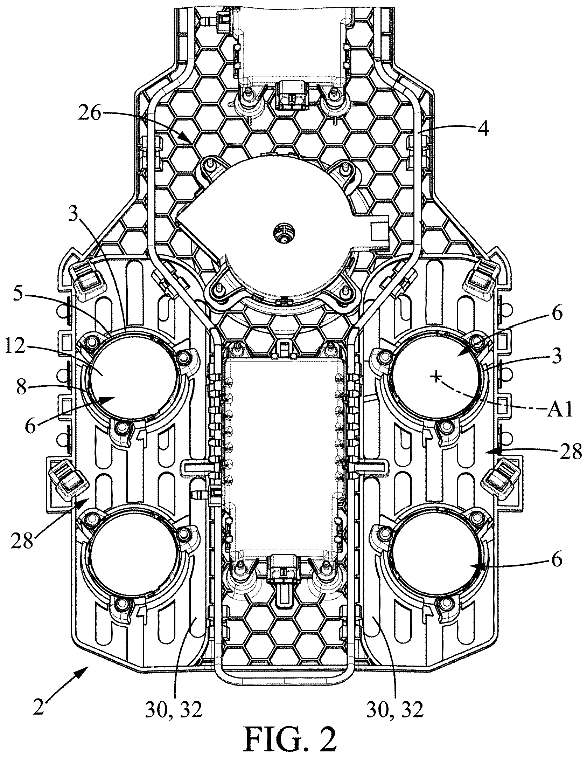

Le siège 10 comporte en outre une plaque de support 2 montée sur l'armature de dossier 17 à l'aide d'un fil 4. La figure 2 illustre une partie de la plaque de support, et en particulier une face opposée à la face destinée à être orientée vers l'occupant du siège de véhicule. Le fil 4 forme un ressort (ou fil ressort), ici replié, est tendu entre la traverse haute et la traverse base. La plaque support 2 est emboîtée élastiquement sur le fil 4 par exemple à l'aide de reliefs d'emboîtage élastique, adaptés pour coopérer avec le fil. Le fil 4 est fixé à chacune de ses extrémités à la traverse haute et, sensiblement en son milieu, à la traverse basse. Alternativement, deux fils distincts peuvent être tendus entre la traverse haute et la traverse basse. Le fil 4 est par exemple métallique pour assurer une certaine rigidité tout en conservant une capacité de déformation élastique. Le fil 4 s'étend de préférence en ondulant dans un plan. Dans le mode de réalisation représenté sur les figures 2 à 5, l'ensemble de la plaque support 2 peut être réalisée dans un matériau plastique tel qu'un polymère. Avantageusement, la plaque de support est réalisée dans un matériau polymère parmi de l'acrylonitrile butadiène styrène généralement désigné par l'acronyme « ABS », un mélange de polycarbonate et d'acrylonitrile butadiène styrène généralement désigné par l'acronyme « ABS- PC », du polyamide (couramment appelé Nylon) désigné par l'acronyme « PA6 », le polyamide désigné par l'acronyme « PA66 » ou sa variante biodégradable et du polycaprolactame généralement désigné par l'acronyme « PCL » et du polypropylène isotactique généralement désigné par l'acronyme « PP ».

La plaque support 2 comporte en outre quatre trous 3 et quatre dispositifs vibrants 6 logés au moins en partie dans les tous 3 et fixés sur la plaque support 2.

Chaque élément vibrant 6 est ici de forme sensiblement cylindrique de section circulaire. Chaque élément vibrant 6 comporte un axe central A1. Dans l'exemple illustré, chaque dispositif vibrant comporte un châssis 8, un élément vibrant 12 et un dispositif non représenté de mise en vibration de l'élément vibrant.

Les trous 3 sont chacun délimité par un bord 5 de la plaque de support. Les trous 3 présentent une dimension supérieure à la dimension du châssis 8 de sorte qu'un jeu J est aménagé entre le châssis 8 du dispositif vibrant et le bord 5 de la plaque de support entourant les trous. Ce jeu J permet d'éviter la transmission des vibrations des dispositifs vibrants 6 directement vers la plaque de support.

Le châssis 8 comprend une portion cylindrique logeant l'élément vibrant 12 et trois pattes d'attache 22. Les pattes d'attaches 22 sont ici régulièrement réparties autour de l'axe A1 du dispositif vibrant 6. Chaque patte d'attache s'étend principalement selon une direction radiale, par rapport à l'axe A1 du dispositif vibrant. Une extrémité longitudinale de chaque patte est solidaire de la portion cylindrique du châssis 8. Au voisinage de l'extrémité opposée, ci-après appelée extrémité libre, chaque patte d'attache 22 présente un trou traversant. Une tige filetée d'une vis 24 s'étend à travers le trou traversant de la patte d'attache et est vissée dans un trou taraudé de la plaque de support. Les pattes d'attache 22 s'étendent au travers du jeu J.

L'élément vibrant 12 comprend par exemple un aimant mobile et un ressort agencé latéralement entre l'aimant mobile et le châssis 8.

En variante, l'élément vibrant 12 comprend un élément piézo-électrique.

Le dispositif de mise en vibration de l'élément vibrant est accessible à l'homme de l'art. Ce dispositif peut notamment comprendre une bobine fixée dans le châssis.

Les vibrations de chaque dispositif vibrant 6 sont avantageusement dirigées essentiellement selon une direction de l'axe A1 du dispositif vibrant considéré, ici sensiblement perpendiculaire à la plaque de support 2.

Chaque dispositif vibrant 6 est dépourvu de toute membrane vibrante. Chaque dispositif vibrant est ainsi à distinguer d'un haut-parleur en ce que chaque dispositif vibrant vise avant tout à transmettre des vibrations (ou bruit solidien) à l'occupant du siège de véhicule, plutôt que du son (ou bruit aérien). Les vibrations de chaque dispositif vibrant peuvent notamment être dans une gamme de fréquences qui n'est pas audible. Les fréquences des vibrations des dispositifs vibrants peuvent notamment être à l'extérieur de la gamme 20 Hz à 100 Hz. Alternativement ou au surplus, l'élément vibrant peut avoir une forme telle que ces trois dimensions sont sensiblement de même ordre de grandeur.

Ici, les dispositifs vibrants 6 sont mis en œuvre pour vibrer en harmonie avec de la musique jouée par un dispositif HI-FI du véhicule automobile et/ou pour masser une zone précise d'un occupant du siège de véhicule et/ou pour alerter l'occupant du siège d'un danger.

Avantageusement, la plaque de support 2 comporte une partie de support 26 et des parties de blocage 28 situées autour des bords 5 des trous 3 de la plaque de support. Les parties de blocage sont conformées pour bloquer la transmission des vibrations des dispositifs vibrants 6.

Dans le mode de réalisation représenté sur la figure 2 et nullement limitatif, la partie de support 26 est située au centre de la plaque de support. Elle s'étend verticalement. Cette partie de support est rigide et solide. Pour assurer une rigidité satisfaisante, la partie de support 26 présente ici des reliefs en nids d'abeille.

Les parties de blocage 28 s'étendent sur une zone de la plaque de support 2 inférieure ou égale à deux fois le rayon de l'élément vibrant 12 du dispositif vibrant. Dans le mode de réalisation représenté sur la figure 2 et nullement limitatif, la plaque de support 2 comporte deux parties de blocage 28. Chaque partie de blocage 28 entoure deux dispositif vibrants alignés verticalement. En variante, la plaque de support 2 comporte un nombre de parties de blocage égal au nombre de dispositifs vibrants 6 montés sur la plaque de support. Les parties des blocage 28 entourent les trous 3 de la plaque de support. En variante, les parties des blocage 28 entourent uniquement une partie des trous de la plaque de support.

Les parties de blocage 28 sont ajourées pour diminuer leur raideur. En particulier, les parties de blocages comportent des lumières traversantes 30.

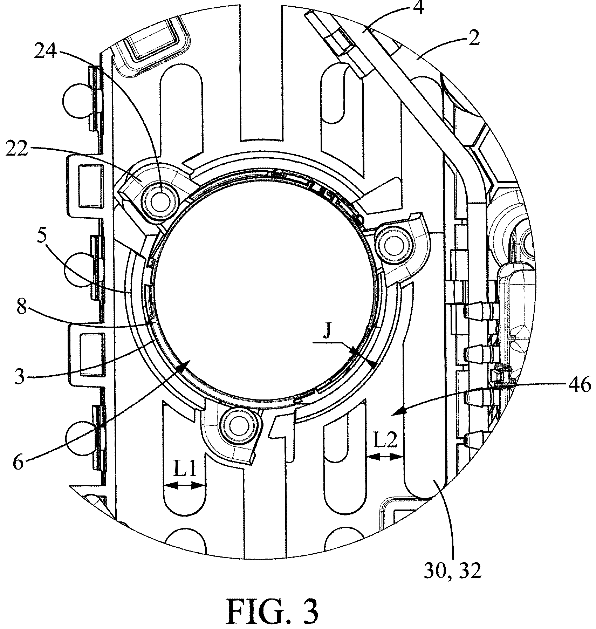

Dans le mode de réalisation illustré sur les figures 2 et 3, les lumières traversantes sont formées par des découpes en forme de bande 32 sensiblement rectiligne. Les découpes en forme de bande 32 sont parallèles les unes aux autres. Elles s'étendent selon une direction verticale quand la plaque de support 2 est montée sur le siège. En variante, elles s'étendent selon une direction horizontale. Par exemple, les découpes en forme de bande 32 présentent une largeur L1 comprise entre 3 millimètres et 10 millimètres et de préférence entre 5 et 8 millimètres. Par exemple, les portions 46 de plaque de support situées entre deux découpes en forme de bande 32 adjacentes présentent une largeur L2 comprise entre 3 millimètres et 10 millimètres et de préférence entre 5 et 8 millimètres.

Dans ce mode de réalisation, pour un dispositif vibrant d'un diamètre égal à D1, la partie de blocage 28 présente un diamètre maximal égale à deux fois D1. Le diamètre D1 est par exemple égal à 30 millimètres.

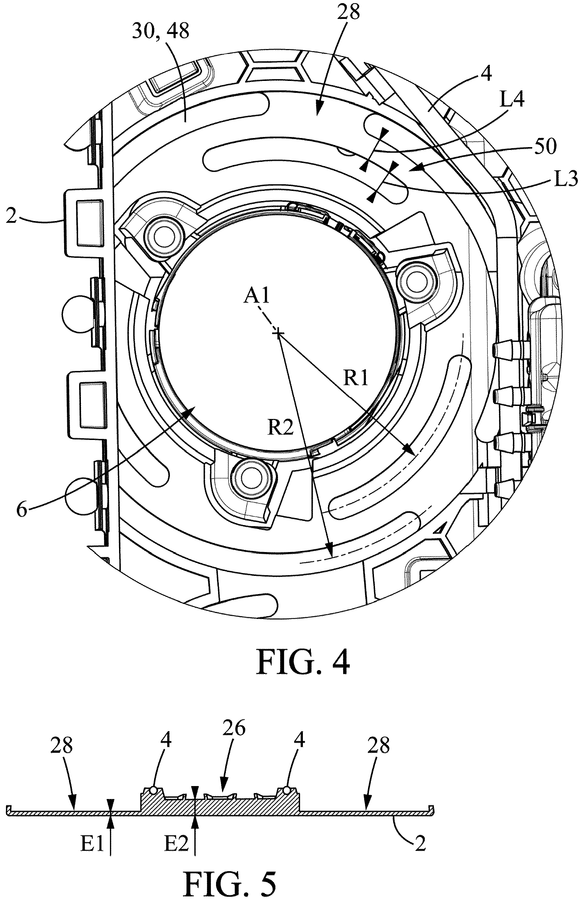

La figure 4 illustre une partie d'une plaque de support selon un deuxième mode de réalisation. La plaque de support 2 de ce deuxième mode de réalisation est identique ou similaire à la plaque de support du premier mode de réalisation à l'exception du fait que les lumières traversantes 30 de la partie de blocage sont des découpes en forme de section circulaire 48. Dit autrement, les lumières traversantes présentent une forme de portion d'anneau.

Avantageusement, la partie de blocage 28 comporte plusieurs découpes en forme de section circulaire 48.

Les découpes 48 en forme de section circulaire présentent une largeur L3 comprise entre 2, 5 millimètres et 6 millimètres et de préférence entre 3 et 5 millimètres.

De préférence, les découpes en forme de section circulaire sont concentriques.

Dans le mode de réalisation illustré sur la figure 4, trois découpes en forme de section circulaire 48 possèdent un premier rayon de courbure R1. Ce rayon de courbure R1 est identique pour les trois découpes en forme de section circulaire. D'autres découpes en forme de section circulaire 48 possèdent un deuxième rayon de courbure R2 différent du premier rayon de courbure R1.

Une portion 50 d'une partie de blocage située entre deux découpes 48 adjacentes en forme de section circulaire ayant deux rayons de courbure différent, présente une largeur L4 comprise entre 2, 5 millimètres et 8 millimètres et de préférence entre 3 et 5 millimètres.

En variante, toutes les découpes 48 en formes de section circulaire peuvent avoir un rayon de courbure identique. Selon une autre variante, toutes les découpes 48 en formes de section circulaire peuvent avoir des rayons de courbure différents.

Dans ce mode de réalisation, pour un dispositif vibrant d'un diamètre égal à D1, la partie de blocage 28 présente un diamètre maximal égale à trois fois et demi D1.

En variante, les parties de blocage 28 comportent chacune une unique lumière traversante 30. Cette lumière traversante peut présenter une forme de bande sensiblement rectiligne ou une forme de bande ondulée ou en zig-zag. Cette unique lumière traversante peut également présenter une forme de section circulaire.

En variante, la dimension des trous 3 correspond à la dimension du châssis 8. Il n'y a pas de jeu J entre le châssis 8 des dispositifs vibrants et les parties de blocages.

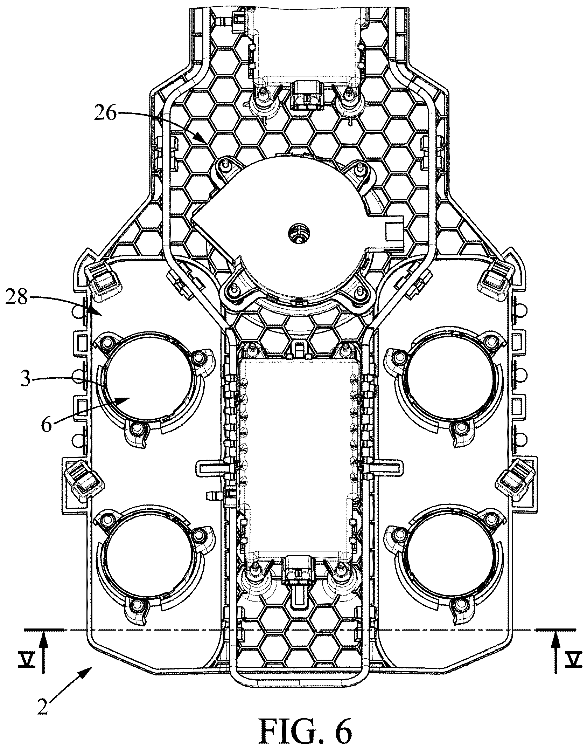

Les figures 5 et 6 illustrent schématiquement une partie d'une plaque de support selon un troisième mode de réalisation.

La partie de blocage 28 de la plaque de support comporte une épaisseur médiane E1 inférieure à une épaisseur médiane E2 de la partie de support 26 de la plaque de support.

En particulier, l'épaisseur médiane E1 de la partie de blocage 28 est comprise entre 30 % et 60 % de l'épaisseur médiane E2 de la partie de support 26. De préférence, l'épaisseur médiane E1 de la partie de blocage 28 est sensiblement égale à 45% de l'épaisseur médiane E2 de la partie de support 26.

Le terme « épaisseur médiane » est relatif à une moyenne de différentes épaisseurs de la plaque qui tient compte de la quantité de surface ayant cette épaisseur.

Dans le premier, le deuxième et le troisième mode de réalisation, les parties de blocage 28 comportent une quantité de matière plastique inférieure par unité de surface à la partie de support 26. Cette faible quantité de matière permet avantageusement de diminuer la raideur des parties de blocage. En conséquence, la transmission des vibrations du dispositif vibrant 6 vers la plaque de support 2, est réduite. En conséquence, l'amplitude des vibrations de la plaque de support est diminuée d'environ 20 % sur les plages de fréquences sur lesquelles les transmissions étaient les plus importantes par rapport à une plaque de support ne comportant pas de partie de blocage.

Avantageusement, avec la plaque de support 2 selon le quatrième mode de réalisation et avec sa variante, pour une même puissance du signal d'alimentation du dispositif vibrant 6, la course de l'élément vibrant 12 est diminuée. En conséquence, avantageusement, la consommation électrique des éléments vibrants peut être diminuée en utilisant plaque de support 2 selon le quatrième mode de réalisation.

Les figures 7 et 8 illustrent une plaque de support 42 d'un module de nez d'assise 36 tel que décrit en liaison avec la figure 1.

La plaque de support 42 illustrée sur la figure 7 comporte une partie de support 26, deux parties de blocage 28 et deux dispositifs vibrants 6. La partie de support 26, les parties de blocage 28 et les dispositifs vibrants 6 sont identiques ou similaires à la partie de support, aux parties de blocage et aux dispositifs vibrants tels que décrites en liaison avec le deuxième mode de réalisation de l'invention illustré sur les figures 2 et 3.

La plaque de support 42 illustrée sur la figure 8 comporte une partie de support 26, deux parties de blocage 28 et deux dispositifs vibrants 6. La partie de support 26, les parties de blocage 28 et les dispositifs vibrants 6 sont identiques ou similaires à la partie de support, aux parties de blocage et aux dispositifs vibrants que décrites en liaison avec le troisième mode de réalisation de l'invention illustré sur la figure 4.

En variante, la plaque de support 2, 42 comporte à la fois une ou plusieurs lumière(s) traversante en forme de bande 32 sensiblement rectiligne et une ou plusieurs lumière(s) en forme de section circulaire.

En variante, la plaque de support 2, 42 comporte à la fois des lumières est des parties ayant une épaisseur plus faible.

Selon une variante non représentée, le siège 10 ne comporte pas de module de nez d'assise 36. Dans ce cas l'assise 16 peut comporter une plaque de support selon l'un des modes de réalisation décrits ci-dessus.

## Revendications

1. Elément de siège (13,16,36) comportant une plaque de support (2, 42) ayant au moins un trou (3) et au moins un dispositif vibrant (6) agencé au moins en partie dans le trou, le dispositif vibrant (6) comportant au moins un élément vibrant (12) mobile selon une direction perpendiculaire à la plaque de support, **caractérisé en ce que** la plaque de support (2, 42) comporte une partie de support (26) et au moins une partie de blocage (28) conformée pour bloquer la transmission des vibrations du au moins un dispositif vibrant, ladite partie de blocage (28) entoure au moins une partie d'un bord (5) du trou (3) de la plaque de support, ladite partie de blocage (28) comportant une quantité de matière inférieure par unité de surface à la partie de support (26) de manière à diminuer la raideur de la plaque.

2. Elément de siège (13,16,36) selon la revendication 1, dans lequel la partie de blocage (28) comporte au moins une lumière traversante (30, 32).

3. Elément de siège (13,16,36) selon la revendication 2, dans lequel la au moins une lumière traversante (30, 32) est une découpe en forme de bande (32) sensiblement rectiligne.

4. Elément de siège (13,16,36) selon la revendication 3, dans lequel la découpe en forme de bande (32) présente une largeur (L1) comprise entre 5 millimètres et 10 millimètres.

5. Elément de siège (13,16,36) selon l'une quelconque des revendications 3 et 4, dans lequel la partie de blocage (28) comporte plusieurs découpes en forme de bande (32) parallèlement les unes aux autres.

6. Elément de siège (13,16,36) selon la revendication 5, dans lequel la plaque de support (2, 42) comprend une portion de plaque (46) située entre deux découpes en forme de bande (32) ayant une largeur (L2) comprise entre 5 millimètres et 10 millimètres, lesdites deux découpes en forme de bande (32) étant adjacentes.

7. Elément de siège (13,16,36) selon l'une quelconque des revendications 2 à 6, dans lequel la au moins une lumière traversante (30) est une découpe (48) en forme de section circulaire.

8. Elément de siège (13,16,36) selon la revendication 7, dans lequel la section circulaire d'une découpe (48) présente une largeur (L3) comprise entre 2, 5 millimètres et 5 millimètres.

9. Elément de siège (13,16,36) selon l'une quelconque des revendications 7 et 8, dans lequel la partie de blocage (28) comporte plusieurs découpes (48) en forme de section circulaire, lesdites découpes (48) en forme de section circulaire étant concentriques.

10. Elément de siège (13,16,36) selon l'une quelconque des revendications 7 à 9, dans lequel au moins deux découpes (48) en forme de section circulaire possèdent un même rayon de courbure (R1).

11. Elément de siège (13,16,36) selon l'une quelconque des revendications 7 à 9, dans lequel au moins deux découpes (48) en forme de section circulaire possèdent des rayons (R1, R2) de courbure différents.

12. Elément de siège (13,16,36) selon l'une quelconque des revendications 9 à 11, dans lequel une portion (50) de plaque de support située entre deux découpes (48) en forme de section circulaire présente une largeur (L4) est comprise entre 2, 5 millimètres et 5 millimètres, lesdites deux découpes (48) en forme de section circulaire étant adjacentes.

13. Elément de siège (13,16,36) selon l'une quelconques des revendications 1 à 12, dans lequel la partie de blocage (28) de la plaque de support comporte une épaisseur médiane (E1) inférieure à une épaisseur médiane (E2) de la partie de support (26) de la plaque de support.

14. Elément de siège (13,16,36) selon la revendication 13, dans lequel l'épaisseur (E1) de la partie de blocage (28) est comprise entre 30 % et 60 % de l'épaisseur (E2) de la partie de support (26), et de préférence, l'épaisseur (E1) de la partie de blocage (28) est sensiblement égale à 45% de l'épaisseur (E2) de la partie de support (26).

15. Elément de siège (13,16,36) selon l'une quelconque des revendications 1 à 14, dans lequel la plaque de support (2) est réalisée dans une matière plastique, en particulier dans un matériau polymère parmi de l'acrylonitrile butadiène styrène, un mélange de polycarbonate et d'acrylonitrile butadiène styrène, du polycaprolactame et du polypropylène isotactique, du polyamide,du polycaprolactame et du polypropylène isotactique.

16. Siège (10) de véhicule comportant un élément de siège (13,16,36) selon l'une quelconque des revendications 1 à 15.

## Patentansprüche

1. Sitzelement (13, 16, 36), das eine Trägerplatte (2, 42) aufweist, die mindestens ein Loch (3) und mindestens eine Vibrationsvorrichtung (6) besitzt, die mindestens teilweise in dem Loch angeordnet ist, wobei die Vibrationsvorrichtung (6) mindestens ein Vibrationselement (12) aufweist, das in einer Richtung senkrecht zu der Trägerplatte bewegbar ist, **dadurch gekennzeichnet, dass** die Trägerplatte (2, 42) einen Trägerteil (26) und mindestens einen Blockierteil (28) umfasst, der zum Blockieren der Übertragung von Vibrationen von der mindestens einen Vibrationsvorrichtung angepasst ist, wobei der Blockierteil (28) mindestens einen Teil einer Kante (5) des Lochs (3) der Trägerplatte umgibt, wobei der Blockierteil (28) eine geringere Materialmenge pro Oberflächeneinheit als der Trägerteil (26) aufweist, um die Steifigkeit der Platte zu verringern.

2. Sitzelement (13, 16, 36) nach Anspruch 1, wobei der Blockierteil (28) mindestens ein Durchgangsloch (30, 32) aufweist.

3. Sitzelement (13, 16, 36) nach Anspruch 2, wobei das mindestens eine Durchgangsloch (30, 32) ein im Wesentlichen geradliniger streifenförmiger Ausschnitt (32) ist.

4. Sitzelement (13, 16, 36) nach Anspruch 3, wobei der streifenförmige Ausschnitt (32) eine Breite (L1) zwischen 5 Millimeter und 10 Millimeter vorweist.

5. Sitzelement (13, 16, 36) nach einem der Ansprüche 3 und 4, wobei der Blockierteil (28) mehrere zueinander parallele streifenförmige Ausschnitte (32) aufweist.

6. Sitzelement (13, 16, 36) nach Anspruch 5, wobei die Trägerplatte (2, 42) einen Plattenabschnitt (46) umfasst, der zwischen zwei streifenförmigen Ausschnitten (32) gelegen ist, die eine Breite (L2) zwischen 5 Millimeter und 10 Millimeter besitzen, wobei die zwei streifenförmigen Ausschnitte (32) nebeneinander liegen.

7. Sitzelement (13, 16, 36) nach einem der Ansprüche 2 bis 6, wobei das mindestens eine Durchgangsloch (30) ein Ausschnitt (48) in Form eines Kreisabschnitts ist.

8. Sitzelement (13, 16, 36) nach Anspruch 7, wobei der Abschnitt in Form des Kreisabschnitts eines Ausschnitts (48) eine Breite (L3) zwischen 2,5 Millimeter und 5 Millimeter vorweist.

9. Sitzelement (13, 16, 36) nach einem der Ansprüche 7 und 8, wobei das Blockierteil (28) mehrere Ausschnitte (48) in Form des Kreisabschnitts aufweist, wobei die Ausschnitte (48) in Form des Kreisabschnitts konzentrisch sind.

10. Sitzelement (13, 16, 36) nach einem der Ansprüche 7 bis 9, wobei mindestens zwei Ausschnitte (48) in Form des Kreisabschnitts über einen gleichen Krümmungsradius (R1) verfügen.

11. Sitzelement (13, 16, 36) nach einem der Ansprüche 7 bis 9, wobei mindestens zwei Ausschnitte (48) in Form des Kreisabschnitts über unterschiedliche Krümmungsradien (R1, R2) verfügen.

12. Sitzelement (13, 16, 36) nach einem der Ansprüche 9 bis 11, wobei ein Abschnitt (50) der Trägerplatte, der zwischen zwei Ausschnitten (48) in Form eines Kreisabschnitts gelegen ist, eine Breite (L4) zwischen 2,5 Millimeter und 5 Millimeter vorweist, wobei die zwei Ausschnitte (48) in Form des Kreisabschnitts nebeneinander liegen.

13. Sitzelement (13, 16, 36) nach einem der Ansprüche 1 bis 12, wobei der Blockierteil (28) der Trägerplatte eine mittlere Dicke (E1) aufweist, die geringer als eine mittlere Dicke (E2) des Trägerteils (26) der Trägerplatte ist.

14. Sitzelement (13, 16, 36) nach Anspruch 13, wobei die Dicke (E1) des Blockierteils (28) zwischen 30 % und 60 % der Dicke (E2) des Trägerteils (26) enthalten ist und vorzugsweise die Dicke (E1) des Blockierteils (28) im Wesentlichen gleich 45 % der Dicke (E2) des Trägerteils (26) ist.

15. Sitzelement (13, 16, 36) nach einem der Ansprüche 1 bis 14, wobei die Trägerplatte (2) aus einem Kunststoffmaterial, insbesondere aus einem Polymermaterial unter Acrylnitril-Butadien-Styrol, einer Mischung aus Polycarbonat und Acrylnitril-Butadien-Styrol, Polycaprolactam und isotaktischem Polypropylen, Polyamid, Polycaprolactam und isotaktischem Polypropylen hergestellt ist.

16. Fahrzeugsitz (10) der ein Sitzelement (13, 16, 36) nach einem der Ansprüche 1 bis 15 aufweist.

## Claims

1. A seat element (13, 16, 36) including a support plate (2, 42) having at least one hole (3) and at least one vibrating device (6) arranged at least partly in the hole, the vibrating device (6) including at least one vibrating element (12) movable in a direction perpendicular to the support plate, **characterized in that** the support plate (2, 42) includes a support part (26) and at least one blocking part (28) shaped to block the transmission of vibrations of the at least one vibrating device, said blocking part (28) surrounds at least part of an edge (5) of the hole (3) of the support plate, said blocking part (28) including a lower quantity of material per unit area of the support plate (26) so as to reduce the stiffness of the plate.

2. The seat element (13, 16, 36) according to claim 1, wherein the blocking part (28) includes at least one through-hole (30, 32).

3. The seat element (13, 16, 36) according to claim 2, wherein the at least one through-hole (30, 32) is a substantially rectilinear strip-shaped cutout (32).

4. The seat element (13, 16, 36) according to claim 3, wherein the strip-shaped cutout (32) has a width (L1) of between 5 millimeters and 10 millimeters.

5. The seat element (13, 16, 36) according to any one of claims 3 and 4, wherein the blocking part (28) includes several strip-shaped cutouts (32) parallel to one another.

6. The seat element (13, 16, 36) according to claim 5, wherein the support plate (2, 42) comprises a plate portion (46) located between two strip-shaped cutouts (32) having a width (L2) of between 5 millimeters and 10 millimeters, said two strip-shaped cutouts (32) being adjacent.

7. The seat element (13, 16, 36) according to any one of claims 2 to 6, wherein the at least one through-hole (30) is an arc-shaped cutout (48).

8. The seat element (13, 16, 36) according to claim 7, wherein the arc of a cutout (48) has a width (L3) of between 2.5 millimeters and 5 millimeters.

9. The seat element (13, 16, 36) according to any one of claims 7 and 8, wherein the blocking part (28) includes several arc-shaped cutouts (48), said arc-shaped cutouts (48) being concentric.

10. The seat element (13, 16, 36) according to any one of claims 7 to 9, wherein at least two arc-shaped cutouts (48) have the same radius of curvature (R1).

11. The seat element (13, 16, 36) according to any one of claims 7 to 9, wherein at least two arc-shaped cutouts (48) have different radii of curvature (R1, R2).

12. The seat element (13, 16, 36) according to any one of claims 9 to 11, wherein a support plate portion (50) located between two arc-shaped cutouts (48) has a width (L4) is between 2.5 millimeters and 5 millimeters, said two arc-shaped cutouts (48) being adjacent.

13. The seat element (13, 16, 36) according to any one of claims 1 to 12, wherein the blocking part (28) of the support plate includes a median thickness (E1) smaller than a median thickness (E2) of the support part (26) of the support plate.

14. The seat element (13, 16, 36) according to claim 13, wherein the thickness (E1) of the blocking part (28) is between 30% and 60% of the thickness (E2) of the support part (26), and preferably, the thickness (E1) of the blocking part (28) is substantially equal to 45% of the thickness (E2) of the support part (26).

15. The seat element (13, 16, 36) according to any one of claims 1 to 14, wherein the support plate (2) is made of a plastic material, in particular a polymer material chosen among acrylonitrile butadiene styrene, a mixture of polycarbonate and acrylonitrile butadiene styrene, polycaprolactam and isotactic polypropylene, polyamide, polycaprolactam, and isotactic polypropylene.

16. A vehicle seat (10) including a seat element (13, 16, 36) according to any one of claims 1 to 15.
